Europäisches Patentamt

European Patent Office

Office européen des brevets

(19)

(11) Publication number: **0 453 575 A1**

# EUROPEAN PATENT APPLICATION
## published in accordance with Art. 158(3) EPC

(21) Application number: 90916369.3

(22) Date of filing: 08.11.90

(86) International application number:
PCT/JP90/01448

(87) International publication number:
WO 91/07804 (30.05.91 91/12)

(51) Int. Cl.⁵: **H02K 11/00, H01C 7/02**

(30) Priority: 13.11.89 JP 292398/89

(43) Date of publication of application:
30.10.91 Bulletin 91/44

(84) Designated Contracting States:
DE FR GB IT

(71) Applicant: NKK CORPORATION
1-2, Marunouchi 1-chome Chiyoda-ku
Tokyo 100(JP)

(72) Inventor: TAJIMA, Kazuo
NKK Corporation 1-2, Marunouchi 1-chome
Chiyoda-ku Tokyo 100(JP)
Inventor: NAKAHARA, Keisuke
NKK Corporation 1-2, Marunouchi 1-chome
Chiyoda-ku Tokyo 100(JP)

(74) Representative: Marsh, Roy David et al
Urquhart-Dykes & Lord Midsummer House
411C Midsummer Boulevard
Central Milton Keynes MK9 3BN(GB)

(54) SMALL DC MOTOR.

(57) A small DC motor having a resin-type PTC thermistor (12) connected in series with its armature winding (5) within the motor casing (2). The resin used for the thermistor is, for example, a mixture of an insulating material such as polyolefin resin or halogenated resin, and a carbon-based good conductor.

FIG.I-b

FIG.I-c

FIG.I-a

EP 0 453 575 A1

## FIELD OF THE INVENTION

The present invention relates to a small-sized direct-current motor in which a resin PTC (positive temperature coefficient) thermistor as an overload protection element is disposed within a motor housing.

## BACKGROUND OF THE INVENTION

As is known, heretofore, mainly bimetal, PTC thermistor, etc. have been used as overcurrent protection elements (also called "current limit elements") for use for protection of a small-sized motor from overloading. In particular, for example, centering the field of car industry, there is a tendency of rapid increase in the quantity of use thereof.

Among these, bimetal is mainly connected to a motor not smaller than 40 mm $\varnothing$, that is, having an overload current not smaller than about 3 - 4A. In general, bimetal is disposed inside the motor. In general, the accuracy in the switching operation of this bimetal is low against an overload current not larger than 3 - 4A, so that this bimetal cannot operate stably. Therefore, PTC thermistor is widely used for a motor not smaller than 3 - 4A, that is, smaller than 40 mm $\varnothing$.

As known well, the PTC thermistor is a resistance element having a positive temperature coefficient. Though the resistance value of the PTC thermistor is low at ordinary temperature, the resistance value is rapidly increased by $10^4$ times - $10^7$ times when the temperature of the PTC thermistor is increased to a predetermined switching temperature or higher by self-heating caused by the overcurrent, heat conduction from a heat source, etc. In most general, $BaTiO_3$ ceramics are known as the PTC thermistor. Further, a resin PTC thermistor formed by mixing an insulating polymer such as polyolefin resin, a halogen resin, etc. and a high electrically conductive material such as carbon, etc. is also well known.

The resin PTC thermistor has characteristics in that the resistivity thereof is lower than that of the $BaTiO_3$ ceramic PTC thermistor and in that the withstanding voltage thereof is higher than that of the $BaTiO_3$ ceramic PTC thermistor. Heretofore, the resin PTC thermistor has been used as a transitory current limiting element for protection of a battery from short-circuiting, protection of a small-sized car motor from overloading, etc.

In the aforementioned conventional small-sized direct-current motor, however, the PTC thermistor used as a current limiting element in the motor is used in the form in which the thermistor provided as a disk-like part with lead wire is mounted on the outside of the motor, for example, on a substrate of a driving circuit, regardless of the thermistor material, ceramics or resin. In short, there is no thermistor disposed within a motor housing (frame), though it can be connected to an armature coil in a series.

There is therefore a problem such as labors for mounting. For this, development of a small-sized direct-current motor with a built-in overload protection element used as a small-sized motor smaller than 40 mm $\varnothing$ has been demanded from the field of car industry particularly requiring reduction both in size and in weight.

## DISCLOSURE OF THE INVENTION

An object of the present invention is to provide a small-sized direct-current motor in which a built-in resin PTC thermistor is disposed therein to be small in size.

In the small-sized direct-current motor according to the present invention, a resin PTC thermistor formed by mixing an electrically insulating resin such as a polyolefin resin or a halogen resin and a carbon high electrically conductive material is connected to an armature coil in a series thereby being disposed within a motor housing. The position where the PTC thermistor is disposed and the method for disposing the PTC thermistor are as follows. A plate-like resin PTC thermistor is connected between one of phosphorus bronze plates connected to brushes and one of input terminals. As another method, a cylinder-like or semicylinder-like resin PTC thermistor may be connected between one of phosphorus bronze plates connected to brushes and one of input terminals.

In the present invention, a plate-like or cylinder-like (including semicylinder-like) PTC thermistor is disposed inside a small-sized direct-current motor (hereinafter merely called "motor") by arranging/connecting the resin PTC thermistor between one of brushes of the motor and one of phosphorus bronze plates used as brush plates or between one of phosphorus bronze plates and one of input terminals. Accordingly, when the motor is overloaded, that is, when the motor is locked while a predetermined voltage is applied between the two electrode terminals of the motor in the condition that the PTC thermistor is disposed inside the motor, the resistance of the PTC thermistor is increased by self-heating of the PTC thermistor caused by the overcurrent, to thereby limit a circuit current in the motor to protect the motor.

In this case, the aforementioned chip-like (plate-like) or cylinder-like small PTC thermistor which can be disposed inside the small-sized direct-current motor can be used because a material with a small resistivity of 1 - 2 $\Omega$ cm and a large withstanding voltage of 100 V/mm or more can be provided as the resin PTC thermistor material formed by mixing a polyolefin or halogen electrically insulating resin and a carbon high electrically conductive material. On the contrary, the conventional PTC thermistor made of a BaTiO₃ PTC ceramic material and having the resistivity of not smaller than 8 Ω cm and the withstanding voltage of 30 - 40 V/mm cannot be almost disposed inside the motor according to the present invention.

BRIEF DESCRIPTION OF THE DRAWINGS

Fig. 1 is a structural explanatory view showing an embodiment of a small-sized direct-current motor according to the present invention;
Fig. 2 is a structural explanatory view of a small-sized direct-current motor according to the present invention in which a PTC thermistor is to be built-in;
Fig. 3 is a view of measurement data showing the result of examination of the change of a circuit current with the passage of time in the case where the motor in the embodiment of Fig. 1 is locked;
Fig. 4 is a view of comparative data showing the change of a circuit current with the passage of time in the case where a conventional small-sized direct-current motor having a PTC thermistor on the outside is locked;
Fig. 5 is a structural explanatory view of a small-sized direct-current motor showing another embodiment of the invention;
Fig. 6 is a view of measurement data showing the result of examination in the embodiment of Fig. 5; and
Fig. 7 is a structural explanatory view of a small-sized direct-current motor showing a further embodiment of the invention.

BEST MODE FOR EMBODYING THE INVENTION

(Embodiment 1)

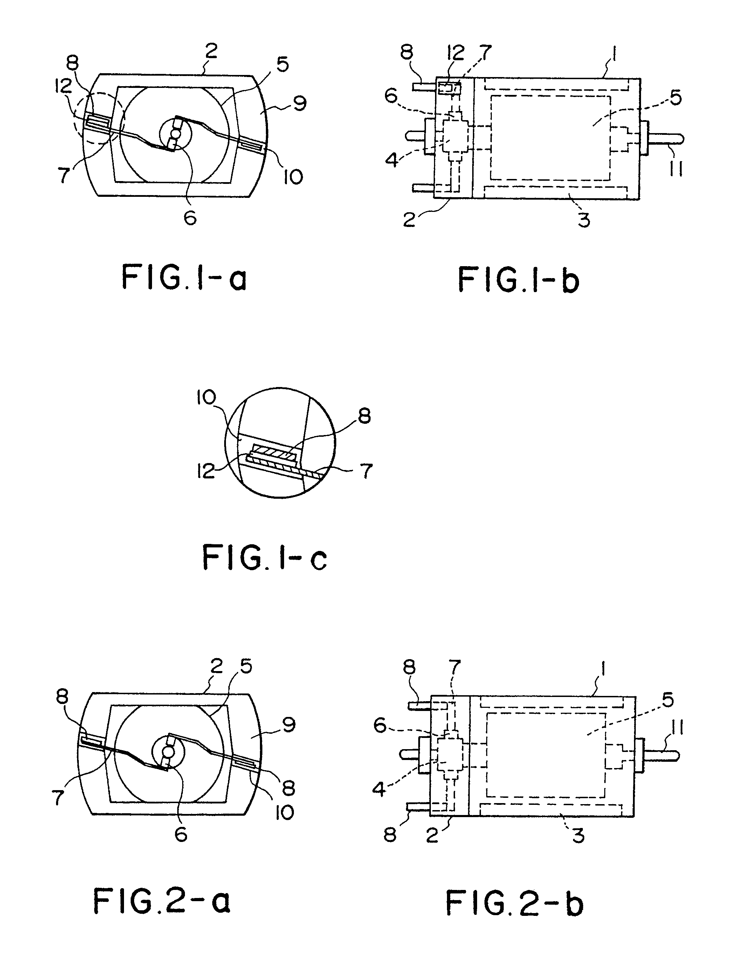

Fig. 2 shows a typical small-sized direct-current motor having a PTC thermistor inside the motor. Fig. 2-b is a vertical sectional view thereof. Fig. 2-a is a side view showing the inside thereof in the case where a small housing is detached. In the drawing, the reference numeral 1 designates a large housing and 2 a small housing for forming a terminal board. Field magnets 3 are fixed to the large housing 1. A commutator 4 is disposed in the small housing 2 and connected to an armature coil 5 formed within the large housing 1. The armature coil 5 is fixed to a shaft 11. The reference numeral 6 designates brushes which are brought into contact with the commutator 4. The brushes 6 are connected to input terminals 8 through phosphorus bronze plates 7 connected to the brushes 6. As shown in Fig. 2-a, the input terminals 8 are connected to the phosphorus bronze plates 7 fixed to grooves 10 provided in a resin 9 stuck to the inside of the small housing 2. Because Fig. 2-a shows the housing where the motor is removed from the large housing 1, the brushes 6 disconnected from the outer circumference of the commutator 4 are shown.

As described above, the small-sized direct-current motor shown in Fig. 2 is of a triode commutator type in which the input terminal plates of the motor, and the phosphorus bronze plates 7 (hereinafter called "brush plates") respectively having the brushes 6 at their ends are arranged as shown in the drawing.

That is, the input terminal plates 8 and the brush plates 7 are inserted/fixed, by application of spot welding or the like, into the U-shaped grooves 10 which are formed on the resin 9 stuck to the inside of the terminal board (hereinafter merely called "small housing 2") by which the the motor shaft 11 and the input terminal plates 9 are fixed, or which are directly formed in the inside of the small housing when the small housing 2 itself is made of the resin 9.

Fig. 1 is a main-part structural explanatory view of a small-sized direct-current motor showing an embodiment of the invention (Claim 3). Fig. 1-a is a plan view showing the inside of the small housing. Fig. 1-b is a vertical sectional view of the small-sized direct-current motor. Fig. 1-c is an enlarged view of a groove 10 and its vicinity. In the drawing, the reference numerals 1 to 11 designate the same or like parts identified by the reference numerals in Fig. 2. Description thereof will be omitted.

While a rectangular plate-like PTC thermistor 12 having electrodes attached to both sides thereof is put between a plate of an input terminal 8 and a brush plate 7, the resin-group PTC thermistor 12 is fixed into the U-shaped groove 10 on the resin 9 stuck to the inside of the small housing of a 12 V small-sized direct-current motor (20 mm ⌀) with the inside resistance of about 18 Ω as shown in Fig. 2, thus to produce a small-sized direct-current motor with a built-in thermistor. A plate-like resin PTC thermistor having PTC characteristic and formed by mixing an insulating polymer of a polyolefin resin and a high electrically conductive material such as carbon is used as the resin PTC thermistor 12. In the resin PTC thermistor, the insulating polymer may be made of a halogen resin or may be made of another resin as long as the resin material has the same PTC characteristic. The resin PTC thermistor 12 used in this embodiment is provided in the form of a rectangular plate with a size of 3mm x 3mm and a thickness of 1 mm. The resin PTC thermistor has ordinary-temperature resistance of about 1.8 Ω (ordinary-temperature resistivity of about 1.5 Ω cm) and a switching temperature of about 100 °C.

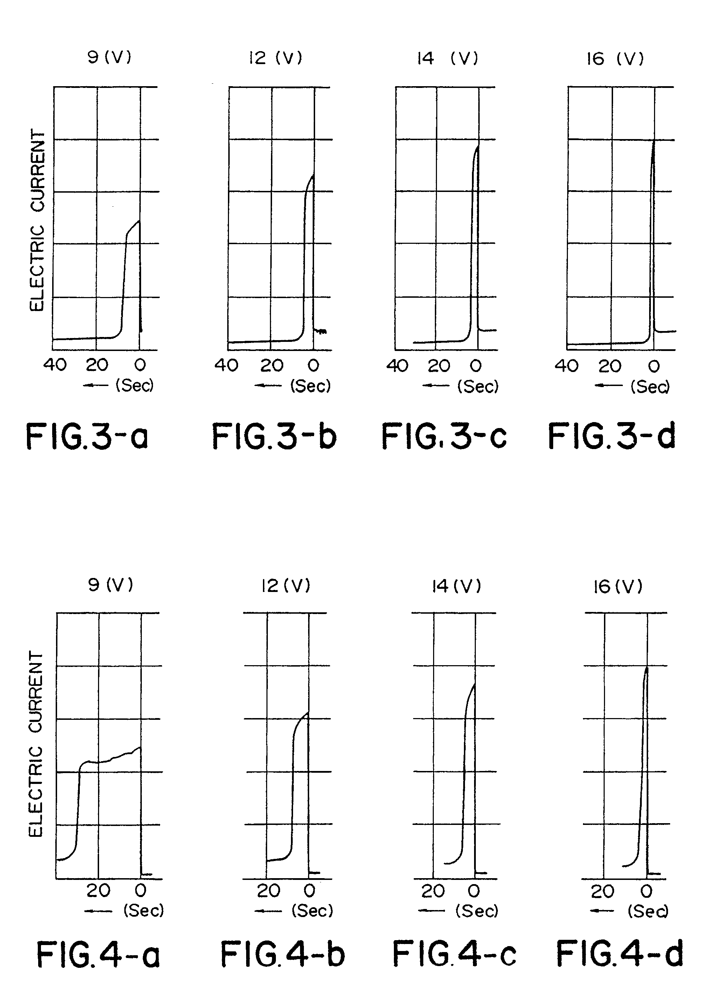

An examination is made by measuring the change of a circuit current with the passage of time under the condition that voltages of 9, 12, 14 and 16 V are successively applied between the input terminals 8 in an ordinary temperature after the shaft 11 of the small-sized direct-current motor shown in Fig. 1 is locked. The result of the examination is shown in Fig. 3. Fig. 3-a shows data in the case where the applied voltage is 9 V. Fig. 3-b shows data in the case where the applied voltage is 12 V. Fig. 3-c shows data in the case where the applied voltage is 14 V. Fig. 3-d shows data in the case where the applied voltage is 16 V. In the drawings, the ordinate shows a current, and the abscissa shows time after inputting (0 sec). It is obvious from Fig. 3 that an overcurrent flows with the application of the respective voltages but the current is reduced to 250 mA or less after 1.5 (16 V) sec. - 8 (9 V) sec. and that the PTC thermistor 12 operates effectively as a current limiting element to prevent the overheat of the motor, as seen from Figs. 3-a, 3-b, 3-c and 3-d.

(Comparative Example 1)

After lead wires are soldered to a resin PTC thermistor having the same material characteristic as used in the embodiment of Fig. 1, addition of molding is made to produce a PTC thermistor with conventional lead wires. The PTC thermistor is disposed in an external driving circuit (not shown) of the small-sized direct-current motor shown in Fig. 2 and connected in a series. The motor is subjected to the same examination as in the embodiment 1. The result of the examination is shown in Figs. 4-a, 4-b, 4-c and 4-d as a comparative example. It is apparent that the response time for current limitation is elongated to 3 sec. (16 V) - 25 sec. (9 V), as seen from Fig. 4.

Comparing the respective results of Embodiment 1 and Comparative example 1 with each other on the basis of Figs. 3 and 4, the response time for current limitation in the motor with the built-in resin PTC thermistor of Embodiment 1 is reduced to 1/2 - 1/3 with respect to the same voltage. Because not only the effect of heat binding is produced but a remarkable improvement of response characteristic is observed, it can be said that the effect of the built-in PTC thermistor is evident.

(Embodiment 2)

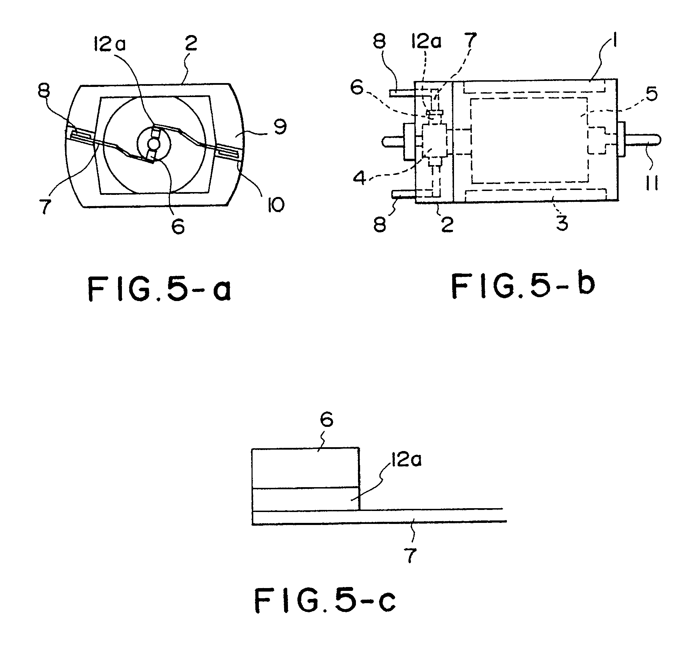

Fig. 5 is a main-part structural explanatory view of a small-sized direct-current motor as an embodiment of the present invention (Claim 4). Fig. 5-a is a plan view showing the inside of the small housing. Fig. 5-b is a vertical sectional view of the motor. Fig. 5-c is a partly enlarged view of a brush. In the drawing, the reference numerals 1 to 11 designate the same or like parts as explained in the small-sized direct-current motor in Fig. 2. Description thereof will be omitted.

In the drawing, electrodes not shown are provided on both surfaces of the respective brush 6 (2 x 2 mm², 1.5 mm thick) of the same small-sized direct-current motor as used in Comparative Example 1 and on both surfaces of the same resin PTC thermistor 12a as used in Embodiment 1. One surface of the resin PTC thermistor 12a is stuck to one surface of the brush by a heat-resisting resin electrically conductive adhesive agent. The other surface of the resin PTC thermistor 12a is stuck to a phosphorus bronze plate 7 in the same manner, so that a so-called overload protecting function brush is formed as shown in Fig. 5-c in which the resin PTC thermistor 12a is sandwiched between the brush 6 and the phosphorus bronze plate 7. By this configuration, a small-sized direct-current motor with a built-in resin PTC thermistor is produced. The resin PTC thermistor 12a has the same material characteristic as that of the thermistor used in Embodiment 1.

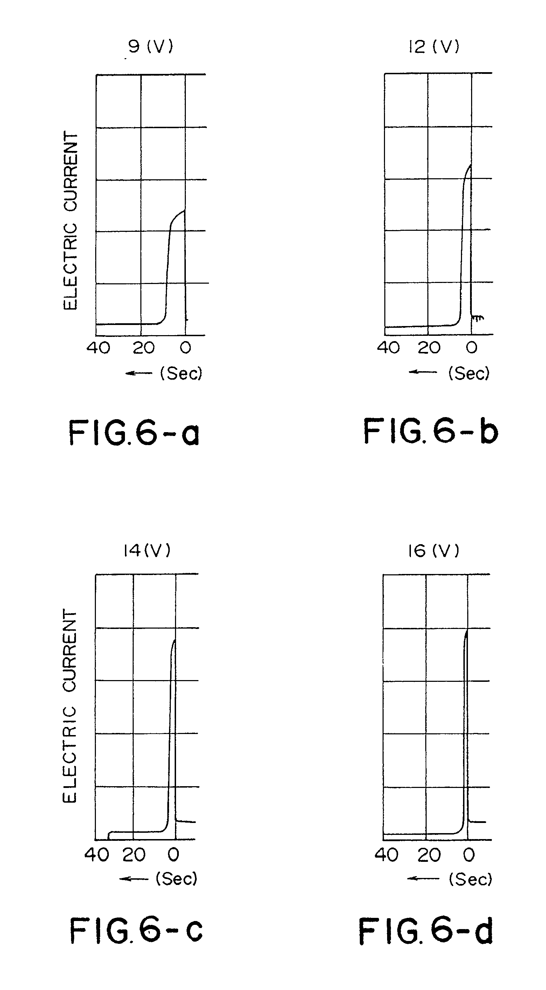

The change of a circuit current with the passage of time in the motor in the embodiment of Fig. 5 is recorded in the same manner as shown in the embodiment of Fig. 1. The result of the recording is shown in Fig. 6. Fig. 6-a shows data representing the change of a current with the passage of time in the case where the applied voltage is 9 V. Fig. 6-b shows data representing the change of a current with the passage of time (start 0 sec.) in the case where the applied voltage is 12 V. Fig. 6-c shows data representing the change of a current with the passage of time in the case where the applied voltage is 14 V. Fig. 6-d shows data representing the change of a current with the passage of time in the case where the applied voltage is 16 V. Compared with the result of the comparative example of Fig. 4, the response time for current limitation is greatly reduced to 1.5 sec. (16 V) - 8 sec. (9 V). In the built-in method in this embodiment, similarly to the embodiment of Fig. 1, the effect of heat binding with the brush is so remarkable that an improvement in response characteristic is observed.

(Embodiment 3)

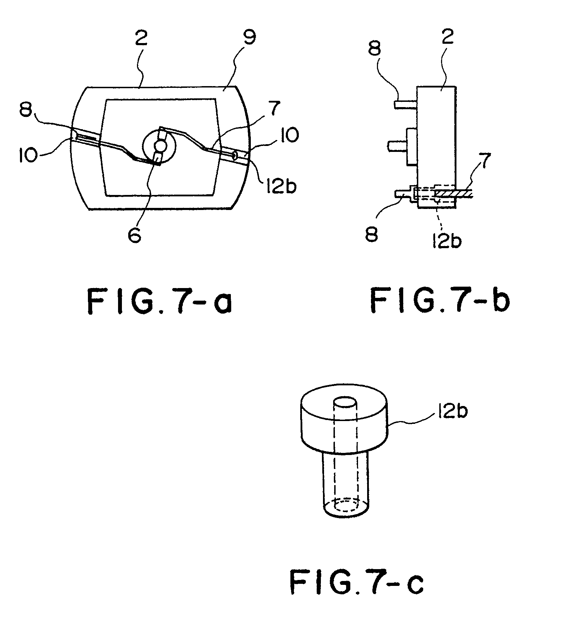

Fig. 7 is a partly structural explanatory view of a small-sized direct-current motor as an embodiment of the present invention (Claim 5). Fig. 7-a is a plan view showing the inside of the small housing. Fig. 7-b is a vertical sectional view of the small housing. Fig. 7-c is a perspective view showing the shape of the PTC thermistor used in this embodiment. In the drawing, the explanatory view of the small-sized direct-current motor is the same as shown in Figs. 2-a and 2-b.

A semicylinder-like PTC thermistor 12b shaped as shown in Fig. 7-c is embedded in a U-shaped groove 10 provided in the resin 9 stuck to the small housing 2 of the small-sized direct-current motor. As shown in Figs. 7-a and 7-b, the PTC thermistor 12b is fixed by connecting one electrode to an input terminal 8 and connecting the other electrode to a phosphorus bronze plate 7 connected to a brush 6, so that a small-sized direct-current motor with a built-in PTC thermistor is produced. Although above description is made on the case where a semicylinder-like PTC thermistor is used, the invention can be applied to the case where a cylinder-like PTC thermistor may be used. The PTC thermistor 12b has an internal diameter of 1mm, a small external diameter of 2mm, a large external diameter of 3.5mm, ordinary-temperature resistance of 1.8 Ω (resistivity of about 4 Ω cm) and switching temperature of 100 °C. The material of the PTC thermistor 12b is the same as that used in Embodiments 1 and 2, and the cylindrical shape can be attained easily.

The motor in the embodiment of Fig. 7 is subjected to the same examination as in the embodiments 2 and 3 to measure the change of a circuit current with the passage of time after the motor is locked by fixing the shaft 11, and the result of the examination is the same as the data shown in Figs. 3 and 6. Comparing this result with the result of Fig. 4 representing the data of the comparative example 1, the response characteristic for current limitation is as excellent as that in the embodiments 1 and 2. The effect of heat binding is also produced by the built-in method in this embodiment, so that an improvement in response characteristic is attained.

As described above in detail with reference to the embodiments 1, 2, and 3, the small-sized direct-current motor according to the present invention is formed, as shown basically in Fig. 1, by: arranging a plate-like PTC thermistor or cylinder-like or semicylinder-like PTC thermistor shown in Fig. 7 at the position of an input terminal within the small housing; and connecting one electrode of the PTC thermistor to the input terminal and connecting the other electrode to a phosphorus bronze plate connected to a brush or connecting the other electrode to a terminal connected thereto.

In the case where the small housing is made of a metal plate, an insulator such as a resin may be attached to the outside of the PTC thermistor to secure insulation from the built-in PTC thermistor.

Because the PTC thermistor is a heating element as described above and because the switching temperature of the PTC material adapted for protection of the overload of the motor is generally designed to be about 90 - 120 °C, the temperature of the PTC thermistor in a switching state, that is, in a current limiting state, becomes about 150 - 200 °C. In the case where a problem may arise in the heat-resisting property of the material for the small housing, an insulating plate being smaller in thermal conductivity may be provided in the outside of the PTC thermistor.

By this configuration, the PTC thermistor is disposed inside the motor, so that when an overload is imposed on the motor or in other words when the motor is locked while a predetermined voltage is applied between the two electrode terminals of the motor, the resistance of the PTC thermistor is increased by self-heating of the PTC thermistor caused by the overcurrent, to thereby limit the circuit current to protect the motor.

By the configuration of the small-sized direct-current motor based on the aforementioned means, the PTC thermistor can be provided without any lead wire, any solder and any mold material. Furthermore, the PTC thermistor can be electrically connected to the motor in a series and can be disposed inside the motor.

As described above in detail, the feature of the present invention is in the effect of heat binding between the resin PTC thermistor and the small-sized direct-current motor, which effect is attained by disposing the thermistor inside the motor.

That is, when the motor is overloaded, not only the self-heating of the PTC thermistor is produced by disposing the PTC thermistor inside the motor but the heat of the motor coil which is produced with the overcurrent is transmitted to the PTC thermistor both by heat conduction through the brushes and by convection heat conduction in the motor housing, so that the response property in the switching operation of the PTC thermistor is improved greatly.

The improvement of the response property in the switching operation is particularly effective for a car motor or the like which is used both in a wide temperature range (-40 to 90 °C) and in a wide voltage range (9 to 16 V) as the condition of use. Accordingly, the problem in response speed against the temperature change and the voltage change or the problem in the lowering thereof in the case where the PTC thermistor is provided in a circuit on the outside of the motor is solved.

Because a small-sized direct-current motor having a built-in small-sized resin PTC thermistor disposed within a motor housing is formed as described above, the effect of heat binding is increased to improve the response property for current limitation, compared with the conventional motor in which the PTC thermistor is connected to a motor driving circuit in a series. Further, in a state of current limitation, the effect of giving a heat radiating plate to the PTC thermistor is attained reversely. Accordingly, a large heat-radiating rate is attained, so that the multiple effect of improving the withstanding voltage of the built-in PTC thermistor is attained.

## Claims

1. A small-sized direct-current motor in which a resin PTC thermistor is connected to an armature coil in series and is disposed within a motor housing.

2. A small-sized direct-current motor according to Claim 1, in which said resin PTC thermistor is formed by mixing a polyolefin insulating resin and a carbon high electrically conductive material.

3. A small-sized direct-current motor according to Claim 1, in which said resin PTC thermistor is formed by mixing a halogen insulating resin and a carbon high electrically conductive material.

4. A small-sized direct-current motor according to Claim 1, in which the resin PTC thermistor is provided as a plate-like PTC thermistor having electrodes on both sides and being connected to one of phosphorus bronze plates respectively connected to small-sized direct-current motor brushes and one of input terminals.

5. A small-sized direct-current motor according to Claim 1, in which said resin PTC thermistor is provided as a plate-like resin PTC thermistor having electrodes on both surfaces and being connected between one of phosphorus bronze plates respectively connected to input terminals of the motor and one of brushes.

6. A small-sized direct-current motor according to Claim 1, in which said resin PTC thermistor is provided as a cylinder-like or semicylinder-like resin PTC thermistor having electrodes on both ends and being connected between one of phosphorus bronze plates connected to motor brushes and one of input terminals.

FIG.1-a

FIG.1-b

FIG.1-c

FIG.2-a

FIG.2-b

FIG.3-a FIG.3-b FIG.3-c FIG.3-d

FIG.4-a FIG.4-b FIG.4-c FIG.4-d

FIG.5-a

FIG.5-b

FIG.5-c

9 (V)

ELECTRIC CURRENT

40  20  0

← (Sec)

# FIG.6-a

12 (V)

40  20  0

← (Sec)

# FIG.6-b

14 (V)

ELECTRIC CURRENT

40  20  0

← (Sec)

# FIG.6-c

16 (V)

40  20  0

← (Sec)

# FIG.6-d

FIG.7-a

FIG.7-b

FIG.7-c

# INTERNATIONAL SEARCH REPORT

**I. CLASSIFICATION OF SUBJECT MATTER (if several classification symbols apply, indicate all)** [6]

According to International Patent Classification (IPC) or to both National Classification and IPC

Int. Cl [5]
H02K11/00, H01C7/01

**II. FIELDS SEARCHED**

Minimum Documentation Searched [7]

| Classification System | Classification Symbols |
|---|---|
| IPC | H02K11/00, H01C7/01, H02K5/14 |

Documentation Searched other than Minimum Documentation
to the Extent that such Documents are Included in the Fields Searched [8]

Jitsuyo Shinan Koho          1950 - 1986
Kokai Jitsuyo Shinan Koho 1971 - 1989

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 53-91358 (Otter Controls Ltd.), 11 August 1978 (11. 08. 78) & DE, A, 2754939 & GB, A, 1594334 | 1 - 6 |
| Y | JP, A, 61-208769 (Matsushita Electric Ind. Co., Ltd.), 17 September 1986 (17. 09. 86) | 2 |
| Y | JP, A, 61-239581 (Matsushita Electric Ind. Co., Ltd.), 24 October 1986 (24. 10. 86) | 3 |
| Y | JP, U, 59-30653 (Mabuchi Motor K.K.), 25 February 1984 (25. 02. 84) | 4 - 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 21, 1991 (21. 01. 91) | February 4, 1991 (04. 02. 91) |

| International Searching Authority | Signature of Authorized Officer |
|---|---|
| Japanese Patent Office | |

Form PCT/ISA/210 (second sheet) (January 1985)